# EUROPEAN PATENT APPLICATION

(11) **EP 0 764 561 A1**
(43) Date of publication of application: **26.03.1997**
(21) Application number: 96114817.8
(22) Date of filing: 16.09.1996
(51) Int. Cl.: B60Q 3/04

(54) **A device for regulating the brightness of lights, in particular for the illumination of a dashboard**

(30) Priority: 25.09.1995 IT TO950758
(71) Applicant: MAGNETI MARELLI S.p.A., 20145 Milano (IT)
(72) Inventor: Nazha, Hassan, 27028 S. Martino Siccomario (IT); Marchesi, Gian Marco, 29029 Rivergaro (IT)
(74) Representative: Quinterno, Giuseppe

(57) **Abstract**

A device for regulating the brightness of display devices of the LCD type in a dashboard of a motor vehicle, comprising a driver circuit (D) receiving at its input a pulse width modulated signal (M) generated by a module (B) for controlling the brightness of the dashboard, and providing at its output a drive signal, which is also pulse width modulated, for the lights (LL) for back-lighting the display devices of the LCD type.

## Description

The present invention relates to a device for controlling the brightness of a motor vehicle dashboard. More specifically, the present invention relates to a device for controlling in continuous manner the brightness of displays of the LCD type (that is to say, of the liquid crystal type) used in a dashboard.

Typically, dashboards installed in motor vehicles comprise a series of lights, for example of the incandescent type, which illuminate the dashboard under conditions of poor visibility (for example at night). These lights are typically switched on at the same time as the side lights of the motor vehicle are switched on.

In addition, the practice of providing the dashboard with a device for regulating the brightness of such lights is nowadays becoming increasingly common. Thus, the user can regulate the brightness of the dashboard to the level he prefers. This regulating device may be formed by a simple rheostat or by an electronic circuit, of known type, which is capable of controlling the power supply to the illuminating lights of the dashboard.

It is also very common nowadays for dashboards to have display devices of the LCD type, that is to say, of the liquid crystal type. As is known, these devices, in order to be visible under conditions of poor illumination, have to have a light source placed behind them relative to an observer. It is generally considered that such devices have to be back-lit. However, in dashboards according to the prior art, the back-lighting of LCD devices is effected at a fixed level. This is a disadvantage because, depending on the level of brightness selected by the user, the illumination of the LCD device, relative to the general illumination of the dashboard, may be too high or too low.

Dashboards are known in the art in which the back-lighting of the LCD devices assumes two levels, a first level when the vehicle side lights are switched off and a second level when the side lights are switched on. Although this solution is preferable in the case where there is only one level of back-lighting, it does not solve the problem described above.

The aim of the present invention is to provide a regulating device which enables all the above-mentioned problems to be solved satisfactorily.

According to the present invention, this aim is achieved by a regulating device having the characteristics indicated in the claims which follow the present description.

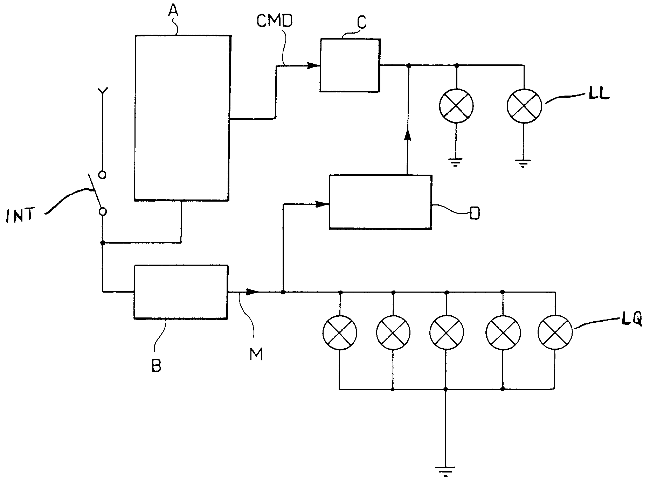

Other advantages and characteristics of the present invention will become clear from the following detailed description which is given with reference to the appended drawings which are provided by way of non-limiting example and in which Figure 1 is a block diagram of an embodiment of the regulating device according to the present invention.

For the purposes of better understanding, a description will now be given, with reference to Figure 1, of a circuit for controlling the illumination of a dashboard which comprises a regulating device according to the invention.

The present invention can advantageously be used in conjunction with a dashboard provided with a device for regulating brightness which comprises a pulse width modulation circuit B (also known by the initials PWM). This circuit B is used for regulating the brightness of lights LQ which illuminate the dashboard by supplying them with a square wave voltage M in which the width, or duration, of the pulses is varied.

The present invention basically consists in using the square wave signal M generated by the pulse width modulation circuit B to regulate the brightness of the dashboard, in order to regulate the back-lighting of the LCD devices. The back-lighting of the LCD devices can thus be varied and is no longer fixed.

Advantageously, according to the present invention, the regulation of the back-lighting occurs only when the side lights of the motor vehicle are switched on, that is to say, in the so-called night position. When the side lights are switched off, that is to say, in the day position, the back-lighting of the LCD devices is instead left at a predetermined fixed value.

As shown in Figure 1, there are four modules A, B, C and D which will now be described.

Module A is a logic circuit which provides at one of its outputs CMD a high or low logic level, depending on the state of the side lights. Module A detects the state of the side lights by means of a connection to a supply circuit for the side lights which is supplied by means of a switch INT actuated, for example, by a user. More specifically, if the side lights are switched off, module A provides a high logic level at its output whereas, if the side lights are switched on, module A provides a low logic level at its output.

This of course takes place when the key of the motor vehicle dashboard is inserted and rotated in such a manner as to activate the electrical supply to the instruments. If the key is not inserted, the dashboard is of course not supplied and all the lights on the dashboard are off.

Module B, as mentioned, is a brightness-regulating circuit of the pulse width modulation type and may be either outside or inside the dashboard. To be more specific, module B is the circuit, of the PWM type, controlled by the user, which permits the regulation of the brightness of the lights LQ which illuminate the dashboard when the side lights are switched on.

Module C is an interface circuit, controlled by the output CMD of module A, to a driver circuit for back-lighting the LCD devices. Module C thus controls a plurality of lights LL for back-lighting the LCD devices. These driver circuits are known in the art as high side drivers.

Module D is a circuit which receives at its input the signal M, of the PWM type generated by module B, and provides at its output a signal, likewise of the PWM type, corresponding to the signal M received at the input. In addition, if the side lights are switched off, module D prevents the high logic level generated by module C for the driver circuit of the lights LL for illuminating the LCD devices from being passed towards the lights LQ for illuminating the dashboard. Thus, module D enables the lights LL for back-lighting the LCD devices to be on when the lights LQ for illuminating the dashboard are off.

In that case, module D, in a currently preferred embodiment, controls the lights LL for back-lighting the LCD devices at a predetermined constant brightness value. In this situation, module D thus generates autonomously a control signal of the PWM type for the lights LL, independently of the signal M coming from module B.

The various modules A, B, C and D will not be described in more detail here because they are of a type known in the art or, as in the case of module D, they can be produced without difficulty by a person skilled in the art on the basis of the description of the developed functions provided here.

Naturally, the principle of the invention remaining the same, the details of construction and forms of embodiment may vary widely with respect to those described and illustrated, without thereby departing from the scope of the present invention.

## Claims

1. A device for controlling the illumination of a motor vehicle dashboard, comprising a pulse width modulation electronic circuit (B) which can control, by means of a first pulse width modulated signal (M), the brightness of a plurality of lights (LQ) for illuminating the dashboard, characterised in that it comprises a driver circuit (D) which receives at its input the first pulse width modulated signal (M) and which can provide at its output a second pulse width modulated signal which can control the brightness of at least one light (LL) for illuminating at least one display device of the LCD type arranged in the dashboard.

2. A device according to Claim 1, characterised in that the driver circuit (D) is configured in such a manner as to permit the illumination of the at least one display device of the LCD type by means of the at least one light (LL) when the plurality of lights (LQ) for illuminating the dashboard is switched off.

3. A device according to Claim 2, characterised in that the driver circuit (D) is configured in such a manner as to permit the illumination of the at least one display device of the LCD type when the plurality of lights (LQ) for illuminating the dashboard is switched off.

4. A device according to Claim 3, characterised in that the driver circuit (D) is configured in such a manner as to bring about the illumination of the at least one display device of the LCD type, when the plurality of lights (LQ) for illuminating the dashboard is switched off, at a predetermined constant brightness value.

5. A device according to Claim 3 or Claim 4, characterised in that the driver circuit (D) is configured in such a manner as to bring about the illumination of the at least one display device of the LCD type, when the plurality of lights (LQ) for illuminating the dashboard is switched off, by generating the second pulse width modulated signal independently of the first input signal (M).
